# FASCICULE DE BREVET EUROPEEN

(11) **EP 1 744 978 B1**
(45) Date de publication et mention de la délivrance du brevet: **04.06.2008**
(21) Numéro de dépôt: 05767899.7
(22) Date de dépôt: 10.05.2005
(51) Int. Cl.: B65G 21/20

(54) **DISPOSITIF DE GUIDAGE LATERAL POUR SYSTEME DE MANUTENTION ET SYSTEME DE MANUTENTION UTILISANT UN TEL DISPOSITIF**
SEITENFÜHRUNGSVORRICHTUNG FÜR EIN HANDLINGSYSTEM UND EINE DERARTIGE VORRICHTUNG VERWENDENDES HANDLINGSYSTEM
LATERAL GUIDING DEVICE FOR A HANDLING SYSTEM, AND HANDLING SYSTEM USING ONE SUCH DEVICE

(30) Priorité: 13.05.2004 FR 0405218
(43) Date de publication de la demande: 24.01.2007
(73) Titulaire: Deflandre, Hervé, 62840 Fleurbaix (FR)
(72) Inventeur: Deflandre, Hervé, 62840 Fleurbaix (FR)
(74) Mandataire: Hennion, Jean-Claude
(86) Numéro de dépôt international: PCT/FR2005/001169
(87) Numéro de publication internationale: WO 2005/120993

(56) Documents cités:
- US-A- 2 425 158
- US-A- 4 909 372

## Description

La présente invention a pour objet un dispositif de guidage latéral pour un système de manutention, ainsi qu'un système de manutention utilisant un tel dispositif. Elle trouve notamment son application dans le domaine des systèmes de manutention continue, en particulier sur des convoyeurs à bandes, à rouleaux, ou à chaînes par exemple, ou encore ponctuellement dans des élévateurs à préhension latérale, des répartiteurs, diviseurs ou retoumeurs en continu, etc...

En général, dans de tels systèmes de manutention continue, les produits convoyés sont guidés latéralement entre des guides de section parallélépipédique, circulaire ou complexe.

Ces guides peuvent être fixes. Mais alors, ces systèmes n'offrent pas de flexibilité quant à la largeur entre chaque guide, donc quant à la largeur des produits manipulés. Aussi, il faut modifier toute la ligne de manutention pour régler cette largeur dès que l'on change de produit manipulé.

Pour éviter une telle opération longue et coûteuse, on a déjà utilisé des guides réglables latéralement de façon à permettre de modifier la largeur de guidage. Dans ce cas, le réglage peut-être manuel, ce qui pose les mêmes problèmes que la modification mentionnée ci-dessus, ou encore être obtenu par des vérins pneumatiques ou électriques.

Dans ce dernier cas du réglage par vérins, qu'ils soient pneumatiques ou électriques, l'encombrement des dispositifs utilisés est trop important, et les solutions techniques de mise en oeuvre s'avèrent coûteuses, notamment dans les parties courbes du convoyage ou dans le cas de convoyage de plusieurs produits sur plusieurs couloirs côte à côte.

Un tel dispositif de guidage latéral de produits est décrit dans US 2,425,158 et correspond au préambule de la revendication 1.

Il existe donc un besoin d'un dispositif de guidage latéral pour de tels systèmes de manutention, qui permette de régler aisément la largeur de guidage sans avoir à effectuer une lourde modification sur le système de manutention, et sans nécessiter la mise en oeuvre de solutions techniques complexes, coûteuses et encombrantes.

C'est donc l'objet de l'invention que de pallier ces inconvénients. A cette fin, l'invention se rapporte selon un premier aspect à un dispositif de guidage latéral de produits se déplaçant sur le chemin de convoyage d'un système de manutention. Le dispositif est de type comportant au moins un guide creux s'étendant le long d'au moins une partie du chemin de convoyage et comprenant au moins deux profilés latéraux coopérant l'un par rapport à l'autre. Chacun de ces profilés latéraux comporte une face interne et une face externe, une au moins de ces faces externes étant une face latérale externe de guidage. Le guide creux comprend également une face supérieure et une face inférieure. Le dispositif de guidage de l'invention est en outre équipé de moyens de réglage latéral de cette face latérale externe de guidage, et est caractérisé en ce qu'il comprend au moins une chambre expansible logée dans le guide creux, et au moins un moyen d'alimentation de cette chambre expansible en fluide d'expansion, de sorte que la distance entre les faces externes respectives des profilés est réglable en fonction de l'alimentation de la chambre en fluide d'expansion entre une distance minimale (chambre non expansée) et une distance maximale (chambre en expansion maximale).

Le dispositif comprend également des moyens de rappel pour faciliter le retour des faces latérales externes des profilés en position de distance minimale entre ces faces latérales externes, lorsque la chambre expansible cesse d'être alimentée en fluide.

Dans une variante de réalisation, ces moyens de rappel comprennent au moins un ressort reliant les deux profilés du guide creux, ce ressort étant en position non étirée et non comprimée lorsque la chambre n'est pas alimentée en fluide et en position étirée ou comprimée lorsque la chambre est alimentée en fluide.

Dans une autre variante de réalisation, éventuellement en combinaison avec la précédente, la chambre expansible est collée à au moins une des faces internes des profilés respectifs.

Les autres variantes suivantes de réalisation peuvent être considérées, éventuellement en combinaison avec les précédentes :
- le moyen d'alimentation de la chambre expansible est un moyen d'alimentation en air,
- l'un au moins des profilés latéraux est un profilé métallique,
- au moins un profil complémentaire, éventuellement en plastique ou encore métallique, pour le guidage de produits de forme complexe, est fixé sur la face externe latérale de guidage,
- le dispositif comprend plusieurs guides creux assemblés de façon à former un guide creux de grande longueur, avec éventuellement au moins un des guides creux assemblés qui est courbe, et éventuellement une chambre expansible distincte pour chacun des guides creux assemblés.

L'invention se rapporte selon un deuxième aspect à un système de manutention, notamment de convoyage, qui comprend au moins un bâti et au moins un chemin de convoyage. Le système de l'invention comprend en outre de façon caractéristique, sur le chemin de convoyage et fixé au bâti, au moins un dispositif de guidage latéral selon l'invention et tel qu'expliqué précédemment.

Dans une variante réalisation, le dispositif de guidage est fixé au bâti du système par l'un au moins des profilés latéraux du guide creux.

Dans une autre variante de mise en oeuvre, éventuellement en combinaison avec la première, le dispositif de guidage est fixé au bâti du système par l'une au moins des faces supérieure et inférieure du guide creux.

Ainsi, le dispositif de guidage latéral et le système de manutention selon l'invention, permettent avantageusement de guider des produits sur un chemin de convoyage de largeur variable par simple réglage de la quantité de fluide alimentant la chambre expansible, et facilitent notamment le réglage dans les parties courbes du chemin de convoyage. Le dispositif de guidage et le système de manutention selon l'invention facilitent en outre le convoyage de produits sur plusieurs couloirs côte à côte.

D'autres caractéristiques et avantages de l'invention apparaîtront plus clairement et de manière complète à la lecture de la description ci-après des variantes préférées de réalisation, lesquelles sont données à titre d'exemples non limitatifs et en référence aux dessins annexés suivants :
- figures 1 a à 1 d: représentent schématiquement un premier exemple de réalisation du dispositif de l'invention,
- figures 2a à 2d: représentent schématiquement un deuxième exemple de réalisation du dispositif de l'invention,
- figures 3a à 3c : représentent schématiquement un troisième exemple de réalisation du dispositif de l'invention,
- figure 4 : représente schématiquement un quatrième exemple de réalisation du dispositif de l'invention.

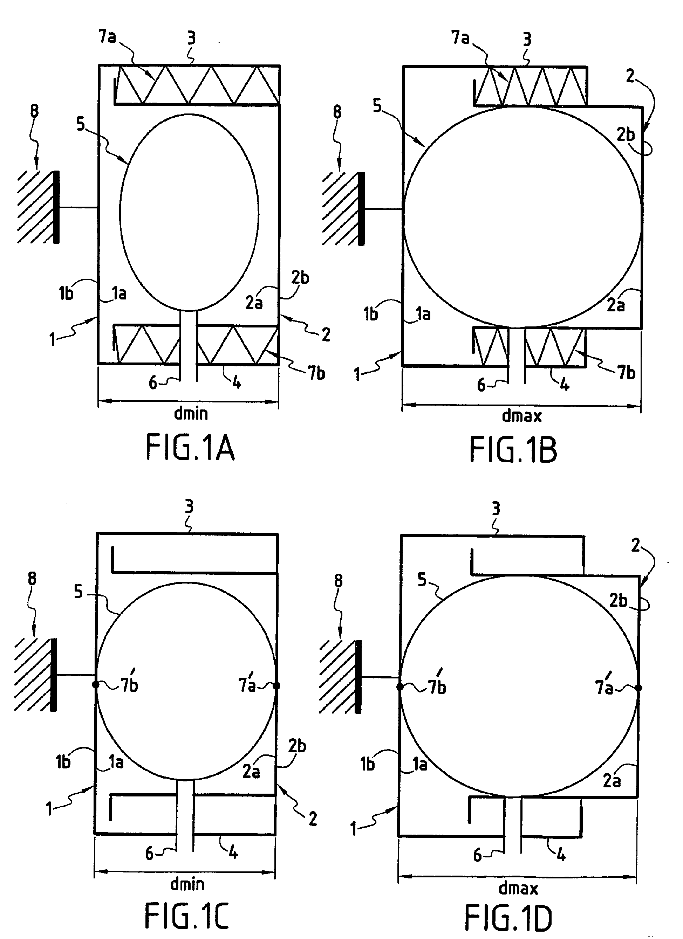

Les figures 1a à 1d représentent schématiquement un premier exemple de réalisation du dispositif de l'invention.

Le dispositif est constitué d'un guide creux comprenant deux profilés latéraux 1 et 2 coopérant l'un par rapport à l'autre. A l'intérieur de ce guide creux est logé une chambre expansible 5 alimentée en fluide d'expansion par un conduit d'alimentation 6 lui-même relié à une source de fluide d'expansion. De préférence, le fluide d'expansion est de l'air. Par chambre expansible, on entend une chambre dont le volume varie en fonction de la quantité de fluide d'expansion qui y est introduite. Il peut s'agir par exemple d'une chambre à air classique dans un matériau de type expansible. Dans cet exemple de réalisation, le dispositif est fixé au bâti 8 d'un système de manutention par l'intermédiaire de la face latérale externe 1b du profilé 1. La face latérale externe 2b du profilé 2 joue alors le rôle de face latérale externe de guidage. Dans la figure 1a, le dispositif est représenté en position de repos, c'est-à-dire avec la distance entre les faces latérales externes 1b et 2b des profilés 1 et 2 qui est minimale (dmin). Dans la figure 1b, le dispositif est représenté en position d'expansion maximale, la chambre expansible 5 étant elle-même en expansion maximale. La distance entre les faces latérales externes 1b et 2b des profilés 1 et 2 est alors maximale (dmax).

Le dispositif des figures 1 a et 1 b comprend en outre des moyens de rappel 7a et 7b pour faciliter le retour des faces latérales externes 1 b et 2b des profilés 1 et 2 dans la position de distance minimale dmin entre ces faces latérales externes 1 b et 2b lorsque la chambre expansible 5 cesse d'être alimentée en fluide, autrement dit lorsque l'on passe de l'état de la figure 1b à l'état de la figure 1 a. Ces moyens de rappel sont constitués, dans cet exemple de réalisation, d'un ressort 7a situé dans la partie supérieure du dispositif et reliant le profilé 1 au profilé 2, et d'un second ressort 7b situé dans la partie inférieure du dispositif reliant également le profilé 1 au profilé 2. Lorsque le dispositif est en position de repos (figure 1 a), les ressorts 7a et 7b sont en position de repos. Lorsque le dispositif est en position d'expansion, éventuellement d'expansion maximale (figure 1 b), les ressorts 7a et 7b sont en position comprimée, éventuellement en compression maximale.

Ainsi, la distance entre les faces latérales externes 1b et 2b des profilés 1 et 2 est directement fonction de la pression dans la chambre expansible 5.

Le dispositif des figures 1c et 1d est identique à celui des figures 1a et 1b, à l'exception des moyens de rappel. En effet, dans ces deux figures, on a supprimé les ressorts, et on a collé la chambre expansible 5 à la face interne latérale 2a du profilé 2, en un point 7'a. Ainsi, lorsque la chambre expansible 5 est en position d'expansion maximale (figure 1d), si cette chambre expansible 5 est mise en dépression, le profilé 2 revient aisément en position de repos en suivant le retour de la chambre expansible 5 à la position de repos, grâce à ce point de collage 7'a.

On peut très bien envisager de combiner l'utilisation de ressorts telle qu'expliquée aux figures 1a et 1b avec la technique du collage de la chambre d'expansion 5 à l'une des parois internes latérales 1a et 2a des profilés 1 et 2 (collage éventuel aux deux faces internes latérales en deux points 7'a et 7'b).

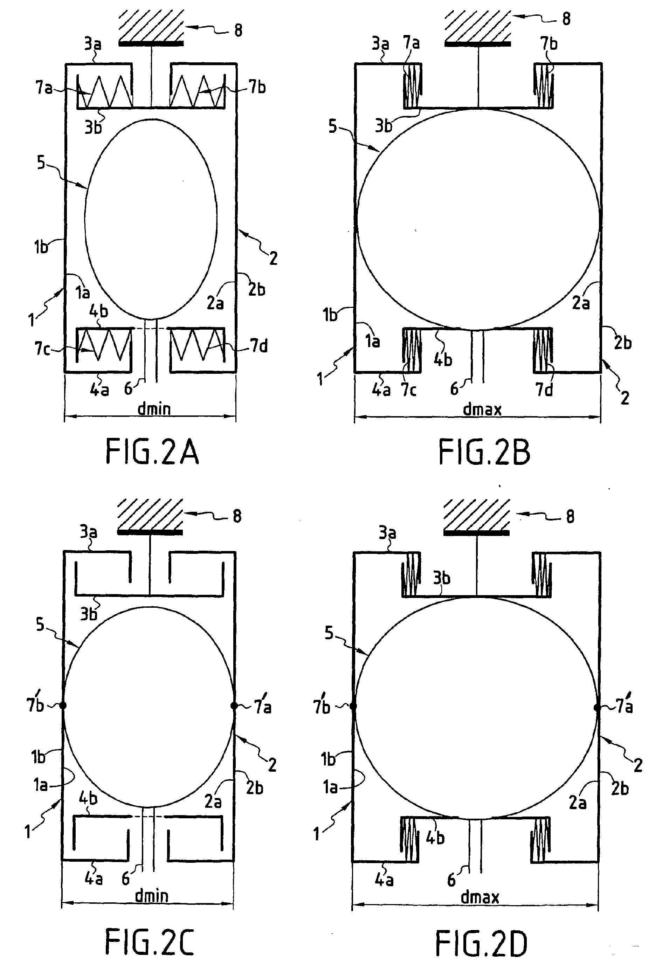

Les figures 2a à 2d représentent schématiquement un deuxième exemple de réalisation du dispositif de l'invention, qui diffère de celui des figures 1 a à 1 d en ce que la forme des profilés 1 et 2 est différente et donc en ce que la coopération entre ces deux profilés est différente. Dans cette configuration, les moyens de rappel sont constitués, dans les figures 2a à 2b, de quatre ressorts 7a, 7b, 7c et 7d. Par ailleurs, le dispositif est fixé au bâti 8 du système de manutention par sa face supérieure 3, elle-même constituée des parties 3a et 3b.

Le principe de fonctionnement des moyens de rappel est identique à celui décrit pour les figures 1a et 1b, à savoir que les ressorts sont en position de repos lorsque la chambre expansible 5 et donc le dispositif lui-même, sont en position de repos, et en position de compression maximale lorsque la chambre expansible 5 et donc le dispositif, sont en position d'expansion maximale.

Les figures 2c et 2d diffèrent simplement des figures 2a et 2b respectivement, en ce que les ressorts 7a, 7b, 7c et 7d ne sont plus nécessaires puisque la chambre expansible 5 est collée à au moins une des faces latérales internes 1a et 2a des profilés 1 et 2. Dans le cas d'un dispositif à deux faces latérales externes de guidage 1b et 2b, il est nécessaire que la chambre expansible 5 soit effectivement collée aux deux faces latérales internes 1a et 2a. Autrement dit, il est nécessaire d'avoir un moyen de rappel de chaque face latérale externe de guidage.

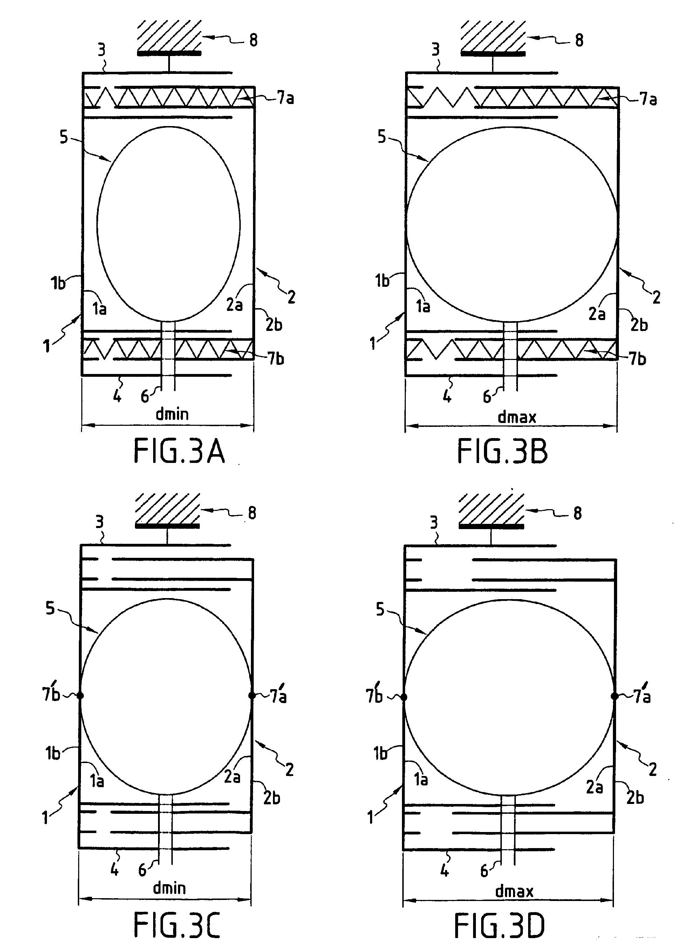

Les figures 3a à 3d représentent schématiquement un troisième exemple de réalisation du dispositif de l'invention, qui diffère là encore des précédents exemples en ce que la forme des profilés 1 et 2 est différente donc en ce que la coopération entre ces deux profilés est différente. Dans cet exemple, le dispositif est à nouveau fixé au bâti 8 du système de manutention par sa face supérieure 3.

Les moyens de rappel, dans les figures 3a et 3b sont ici encore constitués de deux ressorts 7a et 7b. Dans la figure 3a, le dispositif est en position de repos (chambre expansible 5 en position de repos), et les ressorts 7a et 7b sont en position de repos. Par contre, contrairement aux exemples des figures 1b et 2b, dans la figure 3b, le dispositif étant en position d'expansion maximale (chambre expansible 5 en expansion maximale), les ressorts 7a et 7b sont en position d'étirement maximal au lieu d'être en position de compression maximale.

Les figures 3c et 3d représentent quant à elles respectivement le dispositif en position de repos et en position d'expansion maximale, avec suppression des ressorts 7a et 7b, qui sont remplacés par un ou deux points de collage 7'a et 7'b de la chambre expansible 5 sur l'une ou les deux faces latérales internes 1 a et 2a des profilés 1 et 2.

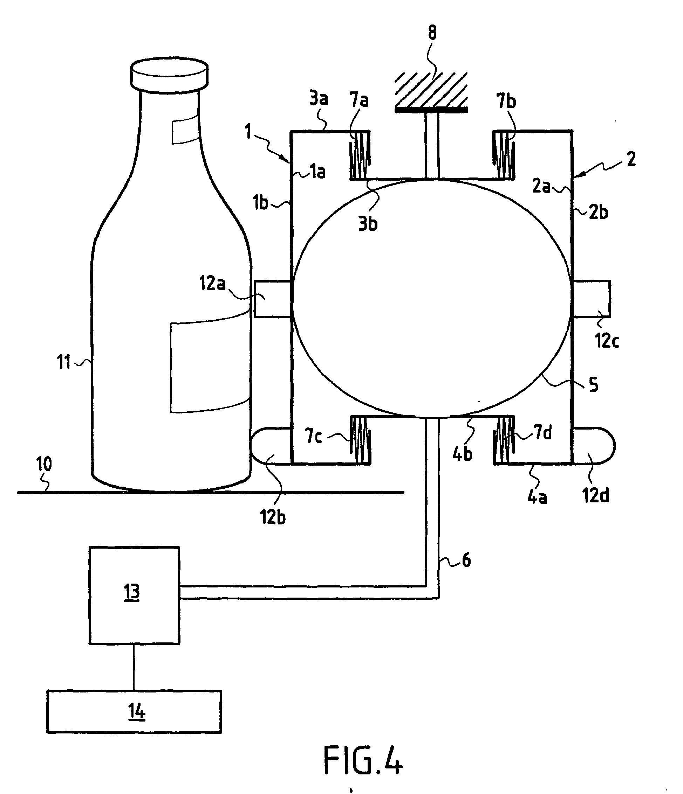

Dans la figure 4 est représenté schématiquement un quatrième exemple de réalisation du dispositif de l'invention, qui est basé sur celui décrit dans les figures 2a et 2b, avec cependant l'ajout de profils complémentaires 12a, 12b, 12c et 12d pour le guidage de produits 11 de forme complexe sur le chemin de convoyage 10. Ces profils complémentaires sont éventuellement en matière plastique ou métallique.

Le dispositif de la figure 4 est équipé de moyens de réglage latéral, de façon analogue au dispositif des exemples de réalisation des figures 1a-1d, 2a-2d et 3a-3d (même si ces moyens de réglage n'ont pas été représentés dans ces figures précédentes). Ces moyens de réglage comprennent une source 13 de fluide d'expansion, reliée au conduit 6 d'alimentation de la chambre expansible 5 en fluide d'expansion, et commandée par une centrale de commande 14 qui permet de maintenir une pression donnée, donc un volume donné, dans la chambre expansible 5, et donc qui permet de maintenir une distance donnée entre les faces latérales externes 1 b et 2b des profilés latéraux 1 et 2.

Un tel dispositif, fixé par la partie 3b de la partie supérieure 3 du dispositif au bâti 8 du système de manutention, permet d'obtenir une expansion symétrique de chacun des profils 1 et 2. Il permet donc par exemple de guider latéralement des produits de forme complexe sur deux chemins de convoyage parallèles.

L'ensemble de la description ci-dessus est donné à titre d'exemple, et est non limitatif de l'invention. En particulier, le choix des moyens de rappel du dispositif en position de repos n'est pas limitatif de l'invention. Tout moyen permettant de ramener le ou les profilés en position initiale convient.

De même, la forme des profilés 1 et 2 n'est pas limitative de l'invention. Toute autre forme, qu'elle soit circulaire, parallélépipédique ou complexe, peut convenir, pourvu que ces profilés 1 et 2 soient conçus pour coopérer l'un par rapport à l'autre de façon à permettre l'expansion et le retour à la position de repos.

Par ailleurs, la fixation du dispositif au bâti du système de manutention telle que décrite ci-dessus, n'est pas non plus limitative de l'invention. On peut combiner fixation latérale et fixation supérieure et/ou inférieure, à condition, évidemment, que la ou les faces latérales externes de guidage soient libres par rapport au bâti.

Enfin, le dispositif de guidage latéral de l'invention peut en lui-même être constitué de plusieurs guides creux tels que décrits ci-dessus assemblés les uns aux autres de manière à former un guide creux de grande longueur, avec éventuellement des portions courbes constituées d'un ou plusieurs de ces guides creux assemblés, de sorte que le chemin de convoyage n'est pas nécessairement rectiligne. Eventuellement, mais pas nécessairement, on peut envisager dans ce cas une chambre expansible 5 distincte pour chacun des guides creux assemblés formant le guide creux de grande longueur. Chacune de ces chambres expansibles 5 sera alors alimentée par un conduit 6 distinct d'alimentation en fluide d'expansion. Chacun des conduits 6 d'alimentation sera relié à une source 13 de fluide d'expansion distincte ou unique. Chacune des sources 13 distinctes, ou la source 13 unique, de fluide d'expansion, sera commandée de préférence par une centrale de commande 14 unique.

## Revendications

1. Dispositif de guidage latéral de produits (11) se déplaçant sur le chemin de convoyage (10) d'un système de manutention, de type comportant au moins un guide s'étendant le long d'au moins une partie dudit chemin de convoyage (10) et comprenant au moins deux profilés latéraux (1,2) coopérant l'un par rapport à l'autre, chacun comportant une face interne (1a,2a) et une face externe (1b,2b), une au moins desdites faces externes (1b,2b) étant une face latérale externe de guidage, ledit dispositif de guidage étant équipé de moyens de réglage latéral de ladite face latérale externe de guidage, comprenant:
- au moins une chambre expansible (5),
- au moins un moyen (6) d'alimentation de ladite chambre expansible (5) en fluide d'expansion,
- des moyens (7a,7b,7c,7d) de rappel pour faciliter le retour desdites faces latérales externes (1 b,2b) desdits profilés (1,2) dans une position de distance minimale (dmin) entre ces dites faces latérales externes (1b,2b), lorsque ladite chambre expansible (5) cesse d'être alimentée en fluide,
de sorte que la distance entre les dites faces externes (1b,2b) desdits profilés (1,2) est réglable en fonction de l'alimentation de ladite chambre (5) en fluide d'expansion entre une distance minimale (dmin) lorsque la chambre est non expansée et une distance maximale (dmax) lorsque la chambre est en expansion maximale,
**caractérisé en ce que** le guide est creux et comprend une face supérieure (3) et une face inférieure (4) définissant avec lesdits profilés latéraux (1,2) le creux dans lequel est logée ladite chambre expansible (5).

2. Dispositif selon la revendication 1, **caractérisé en ce que** lesdits moyens (7a,7b,7c,7d) de rappel comprennent au moins un ressort reliant les deux profilés (1,2) dudit guide creux, ledit ressort étant en position non étirée et non comprimée lorsque ladite chambre (5) n'est pas alimentée en fluide et en position étirée ou comprimée lorsque ladite chambre (5) est alimentée en fluide.

3. Dispositif selon l'une quelconque des revendications 1 et 2, **caractérisé en ce que** ladite chambre expansible est collée à au moins une desdites faces internes (1a,2a) desdits profilés (1,2).

4. Dispositif selon l'une quelconque des revendications 1 à 3, **caractérisé en ce que** ledit moyen (6) d'alimentation de ladite chambre expansible (5) est un moyen d'alimentation en air.

5. Dispositif selon l'une quelconque des revendications 1 à 4, **caractérisé en ce que** l'un au moins desdits profilés latéraux (1,2) coopérant l'un par rapport à l'autre, est un profilé métallique.

6. Dispositif selon l'une quelconque des revendications 1 à 5, **caractérisé en ce qu'**il comprend, sur ladite face latérale externe de guidage, au moins un profil complémentaire (12a,12b,12c,12d) pour le guidage des produits (11) de forme complexe.

7. Dispositif selon la revendication 6, **caractérisé en ce que** ledit profil complémentaire (12a,12b,12c,12d) est en matière plastique.

8. Dispositif selon la revendication 6, **caractérisé en ce que** ledit profil complémentaire (12a,12b,12c,12d) est métallique.

9. Dispositif selon l'une quelconque des revendications 1 à 8, **caractérisé en ce qu'**il comprend plusieurs desdits guides creux assemblés de manière à former un guide creux de grande longueur.

10. Dispositif selon la revendication 9, **caractérisé en ce que** l'un au moins desdits guides creux assemblés de manière à former un guide creux de grande longueur, est courbe.

11. Dispositif selon l'une quelconque des revendications 9 et 10, **caractérisé en ce qu'**il comprend une chambre expansible (5) distincte pour chacun desdits guides creux assemblés de manière à former un guide creux de grande longueur.

12. Système de manutention comprenant au moins un bâti (8) et au moins un chemin de convoyage (10), **caractérisé en ce qu'**il comprend en outre, sur ledit chemin de convoyage (10) et fixé audit bâti (8), au moins un dispositif de guidage latéral selon l'une quelconque des revendications 1 à 11.

13. Système selon la revendication 12, **caractérisé en ce que** ledit dispositif de guidage est fixé audit bâti (8) par l'un au moins desdits profilés latéraux (1,2) dudit guide creux.

14. Système selon l'une quelconque des revendications 12 et 13, **caractérisé en ce que** ledit dispositif de guidage est fixé audit bâti (8) par l'une au moins des dites faces supérieure (3) et inférieure (4) dudit guide creux, et/ou par l'une au moins desdites faces latérales externes (1 b,2b) dudit guide creux.

## Claims

1. A lateral guidance device for products (11) moving on the conveyor track (10) of a goods-handling system, of the type that includes at least one hollow guide located along at least one part of the said conveyor track (10) and including at least two lateral profiles (1, 2) fitting together with each other, each with an inner face (1a, 2a) and an outer face (1b, 2b), with at least one of the said outer faces (1b, 2b) being a lateral external guidance face, with this said hollow guide also including an upper face (3) and a lower face (4), where the said guidance device is equipped with means for the lateral adjustment of the said lateral external guidance face, **characterised in that** it includes:
- at least one expandable chamber (5) housed in the said hollow guide,
- at least one means (6) to supply said expandable chamber (5) with expansion fluid,
- return means (7a, 7b, 7c, 7d) to facilitate the return of the said lateral external faces (1b, 2b) of the said profiles (1, 2) to a position of minimum distance (dmin) between these said lateral external faces (1b, 2b), when the said expandable chamber (5) ceases to be supplied with fluid, so that the distance between the said outer faces (1b, 2b) of the said profiles (1, 2) is adjustable as a function of the supplying of the said chamber (5) with expansion fluid, between a minimum distance (dmin) (chamber not expanded) and a maximum distance (dmax) (chamber on maximum expansion).

2. A device according to claim 1, **characterised in that** the said return means (7a, 7b, 7c, 7d) include at least one spring connecting the two profiles (1, 2) of the said hollow guide, with the said spring being in the unstretched and uncompressed position when the said chamber (5) is not supplied with fluid, and in stretched or compressed position when the said chamber (5) is supplied with fluid.

3. A device according either of claims 1 and 2, **characterised in that** the said expandable chamber is affixed to at least one of the said inner faces (1a, 2a) of the said profiles (1, 2).

4. A device according any of claims 1 to 3, **characterised in that** the said means (6) to supply said expandable chamber (5) is a compressed-air means.

5. A device according any of claims 1 to 4, **characterised in that** at least one of the said lateral profiles (1, 2) fitting together with each other is a metal profile.

6. A device according any of claims 1 to 5, **characterised in that**, on the said lateral external guidance face, it includes at least one additional profile (12a, 12b, 12c, 12d) for the guidance of products (11) of complex shape.

7. A device according to claim 6, **characterised in that** the said additional profile (12a, 12b, 12c, 12d) is in a plastic material.

8. A device according to claim 6, **characterised in that** the said additional profile (12a, 12b, 12c, 12d) is metal.

9. A device according any of claims 1 to 8, **characterised in that** it includes several of the said hollow guides assembled so as to form a hollow guide of considerable length.

10. A device according to claim 9, **characterised in that** at least one of the said hollow guides assembled so as to form a hollow guide of considerable length, is curved.

11. A device according to either of claims 9 and 10, **characterised in that** it includes a separate expandable chamber (5) for each of the said hollow guides assembled so as to form a hollow guide of considerable length.

12. A goods-handling system that includes at least one frame structure (8) and at least one conveyor track (10), **characterised in that** it also includes, on the said conveyor track (10) and fixed to the said frame structure (8), at least one lateral guidance device according any of claims 1 to 11.

13. A system according to claim 12, **characterised in that** the said guidance device is fixed to the said frame structure (8) by at least one of the said lateral profiles (1, 2) of the said hollow guide.

14. A system according either of claims 12 and 13, **characterised in that** the said guidance device is fixed to the said frame structure (8) by at least one of the said upper (3) and lower (4) faces of the said hollow guide, and/or by at least one of the said lateral external faces (1b, 2b) of the said hollow guide.

## Patentansprüche

1. Seitenführungssystem für Produkte (11), die sich auf einem Förderband (10) eines Handlingsystems bewegen, umfassend wenigstens eine Führung, die sich entlang wenigstens eines Teils des Förderbandes (10) erstreckt, und umfassend wenigstens zwei Seitenprofile (1, 2), die miteinander zusammenwirken, wobei jedes eine Innenseite (1 a, 2a) und eine Außenseite (1b, 2b) umfaßt, wobei wenigstens eine der Außenseiten (1b, 2b) eine seitliche äußere Führungsfläche ist, wobei das Führungssystem mit Mitteln zur seitlichen Einstellung der seitlichen äußeren Führungsfläche versehen ist, umfassend:
- wenigstens eine dehnbare Kammer (5),
- wenigstens ein Mittel (6) zur Versorgung der dehnbaren Kammer (5) mit Dehnungsfluid,
- Rückstellmittel (7a, 7b, 7c, 7d), um die Rückstellung der seitlichen Außenflächen (1b, 2b) der Profile (1, 2) in eine Position des minimalen Abstandes (dmin) zwischen diesen seitlichen Außenflächen (1b, 2b) zu erleichtern, wenn die dehnbare Kammer (5) nicht mehr mit Fluid versorgt wird, so daß der Abstand zwischen den Außenflächen (1b, 2b) der Profile (1, 2) in Abhängigkeit von der Versorgung der Kammer (5) mit Dehnungsfluid zwischen einem minimalen Abstand (dmin), wenn die Kammer nicht gedehnt ist, und einem maximalen Abstand (dmax), wenn die Kammer maximal gedehnt ist, einstellbar ist,
**dadurch gekennzeichnet, daß**
die Führung hohl ist und eine Oberseite (3) und eine Unterseite (4) aufweist, die mit den seitlichen Profilen (1, 2) den Hohlraum definieren, in dem die dehnbare Kammer (5) angeordnet ist.

2. System nach Anspruch 1, **dadurch gekennzeichnet, daß** die Rückstellmittel (7a, 7b, 7c, 7d) wenigstens eine Feder umfassen, die die beiden Profile (1, 2) der hohlen Führung verbindet, wobei die Feder in nicht ausgezogener und nicht komprimierter Position ist, wenn die Kammer (5) nicht mit Fluid versorgt wird, und in ausgezogener oder komprimierter Position ist, wenn die Kammer (5) mit Fluid versorgt wird.

3. System nach einem der Ansprüche 1 und 2, **dadurch gekennzeichnet, daß** die dehnbare Kammer an wenigstens eine der Innenseiten (1 a, 2a) der Profile (1, 2) geklebt ist.

4. System nach einem der Ansprüche 1 bis 3, **dadurch gekennzeichnet, daß** das Versorgungsmittel (6) der dehnbaren Kammer (5) ein Luftversorgungsmittel ist.

5. System nach einem der Ansprüche 1 bis 4, **dadurch gekennzeichnet, daß** wenigstens eines der Seitenprofile (1, 2), das mit dem anderen zusammenwirkt, ein metallisches Profil ist.

6. System nach einem der Ansprüche 1 bis 5, **dadurch gekennzeichnet, daß** es auf der seitlichen äußeren Führungsfläche wenigstens ein komplementäres Profil (12a, 12b, 12c, 12d) für die Führung der Produkte (11) von komplexer Form umfaßt.

7. System nach Anspruch 6, **dadurch gekennzeichnet, daß** das komplementäre Profil (12a, 12b, 12c, 12d) aus Kunststoff ist.

8. System nach Anspruch 6, **dadurch gekennzeichnet, daß** das komplementäre Profil (12a, 12b, 12c, 12d) metallisch ist.

9. System nach einem der Ansprüche 1 bis 8, **dadurch gekennzeichnet, daß** es mehrere der Hohlführungen umfaßt, die zusammengefügt sind, um eine Hohlführung von großer Länge zu bilden.

10. System nach Anspruch 9, **dadurch gekennzeichnet, daß** wenigstens eine der zusammengefügten Hohlführungen zur Bildung einer Hohlführung von großer Länge gekrümmt ist.

11. System nach einem der Ansprüche 9 und 10, **dadurch gekennzeichnet, daß** es eine getrennte dehnbare Kammer (5) für jede der zusammengefügten Hohlführungen zur Bildung einer Hohlführung von großer Länge umfaßt.

12. Handlingsystem, umfassend wenigstens ein Gehäuse (8) und wenigstens ein Förderband (10), **dadurch gekennzeichnet, daß** es ferner auf dem Förderband (10) und auf dem Gehäuse (8) befestigt wenigstens eine Seitenführung nach einem der Ansprüche 1 bis 11 umfaßt.

13. System nach Anspruch 12, **dadurch gekennzeichnet, daß** das Führungssystem auf dem Gehäuse (8) durch wenigstens eines der Seitenprofile (1, 2) der Hohlführung befestigt ist.

14. System nach einem der Ansprüche 12 und 13, **dadurch gekennzeichnet, daß** das Führungssystem am Gehäuse (8) durch wenigstens eine der oberen (3) und unteren Seiten (4) der Hohlführung und/oder durch wenigstens eine der seitlichen Außenflächen (1b, 2b) der Hohlführung befestigt ist.
